# EUROPÄISCHE PATENTANMELDUNG

(11) **EP 2 003 338 A2**
(43) Veröffentlichungstag der Anmeldung: **17.12.2008**
(21) Anmeldenummer: 08010045.6
(22) Anmeldetag: 02.06.2008
(51) Int. Cl.: F03G 7/00

(54) **Einrichtung und Verfahren zur Erzeugung elektrischer Energie in Kleinkraftwerksanlagen**

(30) Priorität: 14.06.2007 DE 102007027347
(71) Anmelder: Conpower Energieanlagen GmbH & Co KG, 81249 München (DE)
(72) Erfinder: Helmbold, Hermann, 57392 Schmallenberg (DE); Wimmer, Franz, 82110 Germering (DE)
(74) Vertreter: Schmidt, Karl Michael

(57) **Zusammenfassung**

Die Erfindung betrifft eine Einrichtung sowie ein Verfahren zur Erzeugung elektrischer Energie in Kleinkraftwerksanlagen, gemäß Oberbegriff des Patentanspruches 1 und 9. Um hierbei zu erreichen, dass bei direktem elektrischen Energiebedarf eine wirkungsgradstabile Bereitstellung elektrischer Energie gegeben ist, die ausserdem weitestgehend spannungsstabil ist, ist erfindungsgemäß vorgeschlagen, dass parallel zu den Mitteln (2, 3, 4, 5) zur elektrischen Zwischenspeicherung der Energie ein Schalter/Umschalter (6) liegt, über welchen wahlweise oder zusätzlich der Wechselstromausgang (10) der elektrischen Energieerzeugung und der Externwechselstromanschluss (11) direkt zusammenschaltbar sind.

## Beschreibung

Die Erfindung betrifft eine Einrichtung sowie ein Verfahren zur Erzeugung elektrischer Energie in Kleinkraftwerksanlagen, gemäß Oberbegriff des Patentanspruches 1 und 9.

Einrichtungen dieser Art werden im Zusammenhang mit Wärmepumpen oder der Nutzung anderer alternativer Primärenergieformen immer wichtiger. Dies steht wiederum in direktem Zusammenhang mit der aktuellen Klimadiskussion. Darüber hinaus besteht nach wie vor Bedarf, den Wirkungsgrad solcher Kleinkraftwerksanlagen zu verbessern, wie sie beispielsweise auch als Blockheizkraftwerke bekannt sind, und Wärme und elektrische Energie gleichermaßen erzeugen können.

Elektrische Energie wird ausserdem auch in mobilen Anlagen, bspw im Baustellenbereich benötigt. Ansonsten gibt es auch Insellösungen für die elektrische EnergieVersorgung einer lokalen Einrichtung, die ansonsten keinen Einspeiseanschluß ins öffentliche Stromnetz aufweisen.

In Verbindung mit Kleinkraftwerken in Wohnhäusern oder landwirtschaftlichen Betrieben kann neben der eigenen Nutzung der elektrischen Energie auch eine Einspeisung der Überschüsse an erzeugter elektrischer Energie ins öffentliche Netz lukrativ sein.

Bei Windkraftanlagen, oder Solar- oder Biogasanlagen mit ORC (Organic-Rankine-Cycle)-Einheiten steht die Energie und damit die Drehzahl der Generatoren nicht auf konstantem Niveau. Bei Windkraft wird dies ggfs über Getriebe gelöst, die jedoch energieaufzehrend sind und den Wirkungsgrad solcher Anlagen stark beeinträchtigen.

Aus der US 2007/0101735 A1 ist eine wärmepumpensteuerung mit Generator bekannt. Hierbei erfolgt eine Drehzahlsteuerung zur Vergleichmäßigung der am Generator erhaltenen Spannung, sowie eine entsprechende Umrichtung von Wechselspannung zu Gleichspannung und umgekehrt. Hierbei ist eine ausschließliche Steuerung über solche Mittel jedoch nicht effektiv genug.

Dabei wird die am Generator anliegende elektrische Energie zunächst in einem Gleichrichter gleichgerichtet um sie einem Akkumulator zuzuführen und speichern zu können. Dabei dient der Akkumulator nicht als ausschließlich als Speicher, sondern sozusagen als Spannungsschwankungspuffer. Danach wird die Spannung wieder umgerichtet, die Spannungshöhe geregelt etc.

All dies ist mit der ausschließlichen Intention nur die Schwankungen der Ausgangsspannung des Generators auszugleichen viel zu auf wändig, und ausserdem auch wirkungsgradreduzierend.

Der Erfindung liegt daher die Aufgabe zugrunde, eine Einrichtung sowie ein Verfahren der gattungsgemäßen Art dahingehend weiterzuentwickeln, dass bei direktem elektrischen Energiebedarf eine wirkungsgradstabile Bereitstellung elektrischer Energie gegeben ist, die ausserdem weitestgehend spannungsstabil ist.

Die gestellte Aufgabe ist bei einer Einrichtung der gattungsgemäßen Art erfindungsgemäß durch die kennzeichnenden Merkmale des Anspruches 1 gelöst.

Weitere vorteilhafte Ausgestaltungen sind in den abhängigen Ansprüchen 2-8 angegeben.

Hinsichtlich eines Verfahrens ist die gestellte Aufgabe erfindungsgemäß durch die kennzeichnenden Merkmale des Patentanspruches 9 gelöst.

Weitere vorteilhafte Ausgestaltungen sind in den übrigen abhängigen Ansprüchen angegeben.

Kern der Erfindung ist, dass parallel zu den Mitteln zur elektrischen Zwischenspeicherung der Energie ein Schaltex/Umschalter liegt, über welchen wahlweise oder zusätzlich der Wechselstromausgang der elektrischen Energieerzeugung und der Externwechselstromanschluss direkt zusammenschaltbar sind.
1. Option: Der Ausgang der Energieerzeugung, bspw des Generator wird ausschließlich über Gleichrichtung auf den Akkumulator geschaltet und zwischen gespeichert, und anschließend über einen DC/DC-Wandler transformiert auf eine stabile elektrische Spannung und sodann über einen wechselrichter wieder zu Wechselstrom gewandelt, der dann am Externwechselstromanschluss anliegt.
2. Option: Der Ausgang der Energieerzeugung wird über dem Schalter bzw Umschalter direkt auf den Wechselstromausgang des Externwechselstromanschluss geschaltet.
3. Option: Option 1 und Option 2 werden parallel betrieben.

Mit dieser wahlweisen Umschaltbarkeit wird erreicht, dass beispielsweise Kleinkraftwerksanlagen, wie Solar-, wind-, Biogas- und fossile Brennstoffkraftwerksanlagen leicht im Inselbetrieb und bedarfsweise optimal betrieben werden können. Solche Kleinkraftwerksanlagen unterliegen stark schwankendem Energiebedarf, vor allem wenn sie lokal betrieben werden. Um dem Rechnung zu tragen werden die Schaltzustände im Bedarfsfall so gewählt, dass optimale d.h. wirkungsgradoptimierte Energienutzung vorliegt. Der bekannte Fall, mit Gleichrichtung, Akku-Ladung, Gleichstrom/Gleichstrom-Umspannung (über DC/DC-Wandler) und wieder anschließender Wechselrichtung ist stark wirkungsgradherabsetzend weil viele thermische Verluste entstehen, und ist nur dann von Vorteil, wenn Energie erzeugt, die aber aktuell nicht abgefragt und deshalb gespeichert wird.

Wird an der Kleinkraftwerksanlage aber aktuell Energie abgerufen, so ist es wesentlich vorteilhafter dann auf direkte Zusammenschaltung der Wechselstromanschlüsse umzuschalten und keine Akkumulatoren zu laden oder über diese einen energiegepuffterten Dauerbetrieb zu fahren.

Entweder wird der elektrische Ausgang der Energieerzeugung, bspw des Generators im Zwischenspeicherbetrieb über Gleichrichtung betrieben, wobei

In vorteilhafter Ausgestaltung ist angegeben,
dass der Umschalter ein einphasiger Umschalter ist. Dies ist relevant, wenn der Generator lediglich ein einphasiger Wechselstromgenerator ist.

Alternativ dazu kann der Generator auch ein dreiphasiger Wechselstromgenerator, also ein Drehstromgenerator sein. Dazu ist es natürlich zwingend, dass der Umschalter ein dreiphasiger Umschalter ist.

In weiterer vorteilhafter Ausgestatung ist angegeben, dass die Energieerzeugung und die Betätigung des Umschalters von einer gemeinsamen Steuer- und Regeleinrichtung steuerbar sind. Auf diese Weise kann die Überwachung der Ausgangsspannung am Generator direkt mit der Ansteuerung der Umschaltung logisch verknüpft werden. Das heisst, wenn die Spannungsschwankungen, d.h. das ΔU einstweilen außerhalb der Schwankungstoleranz ist, und dies womöglich über eine Zeit ΔT hinaus, so kann die Steuerung sofort das Steuersignal für den Umschalter bzw für den Antrieb des Umschalters generieren, zumindest solange bis die Spannung wieder innerhalb der Schwankungstoleranz liegt.

Auf diese Weise wird eine auf alle Fälle weitestgehend stabile Ausgangsspannung am Externwechselstromanschluss geliefert. Dies weil entweder die dort anliegende wechselspannung direkt vom Ausgang des Generator herübergebrückt wird, oder im Falle von Schwankungen über die Akkumulatorladung spannungsstabil gepuffert wird.

Erheblich vorteilhaft ist es, wenn die Größen ΔU und ΔT einstellbar sind. Auf diese weise lassen sich diese Werte, die sodann in die Regelung bzw Steuerung eingehen, an die jeweils technischen Bedürfnisse eines Betreibers anpassen.

Neben dieser Umschaltung kann aber auch auf die Generatordrehzahl Einfluss genommen werden. Hierfür, wird wie nachfolgend noch näher beschrieben, die Turbine bzw die Turbinenzuströmung entsprechend geregelt.

In weiterer vorteilhafter Ausgestaltung ist angegeben, dass der Umschalter über die Steuerung betätigbar ist, derart, dass die am Wechselstromausgang der elektrischen Energieerzeugung anliegende Spannung bzw anliegenden Spannungen über elektrische Spannungsmesser ermittelbar sind, und hierüber der elektrische Energieerzeugungsprozess spannungsstabil regelbar ist.

In weiterer vorteilhafter Ausgestaltung ist angegeben, dass der jeweilige aktuelle Betriebsstatus "Direkt-" oder "Akkumulator-" - Betrieb auf einem Display anzeigbar ist. Hierüber kann der aktuelle Betriebszustand erkannt werden.

In weiterer vorteilhafter Ausgestaltung ist angegeben, dass über einen handbetätigten Schalter oder eine Fernbedienung vom automatisch generierten Umschaltbetrieb auf manuellen Umschaltbetrieb umschaltbar ist. Es gibt Betriebsweisen, wie beispielsweise das Anfahren einer solchen Einrichtung in der das notwendig oder vorteilhaft ist.

Im Hinblick auf ein erfindungsgemäßes Verfahren besteht der Kern der Erfindung darin, dass parallel zu den Mitteln zur elektrischen Zwischenspeicherung der Energie ein Schalter/Umschalter liegt, über welchen wahlweise oder zusätzlich der Wechselstromausgang der elektrischen Energieerzeugung und der Externwechselstromanschluss direkt zusammenschaltbar sind, und dass der Umschaltvorgang in Abhängigkeit zur Stabilität der am Wechselstromausgang der elektrischen Energieerzeugung anliegenden elektrischen Spannung zugeschaltet wird. Nach diesem Verfahren arbeitet letzlich die genannte Einrichtung auch vorteilhaft.

In weiterer vorteilhafter Ausgestaltung ist angegeben, dass die Betätigung der Umschaltung in Abhängigkeit zu dem an den Klemmen des Wechselstromausganges der elektrischen Energieerzeugung gemessenen Spannung erfolgt, derart, dass bei Auftreten von Schwankung der elektrischen Spannung ausserhalb einer Schwankungstoleranz von ΔU über einen Zeitraum von mehr als ΔT der Umschalter so betätigt wird, dass die Energieversorgung auf die über den Akkumulator und die Um- und Wechselrichter geführte Stromversorgung automatisch geschaltet wird.

In weiterer vorteilhafter Ausgestaltung ist angegeben, dass die Drehzahl des Generators so geregelt wird, dass die Schwankungen innerhalb von ΔU und ΔT bleiben.

Ferner ist vorteilhaft, wenn der Beströmungsprozess einer den Generator antreibenden Turbine in Abhängikeit der an den Klemmen des Wechselstromausganges der elektrischen Energieerzeugung gemessenen Spannung U derart geregelt wird, dass die am besagten Wechselstromausgang anliegende elektrische Spannung innerhalb einer Schwankungsbreite von ΔU bleibt.

Vorteilhaft ist hierbei ein Spannungsschwankungswert von ΔU bei +/- 15 Volt.

Ebenso vorteilhaft aber auch nur beispielhaft ist es, wenn das Zeitfenster innerhalb der Spannungsschwankungen oberhalb von |ΔU| liegen, bei
ΔT = 10 Sekunden liegt.

Eine letzte sehr vorteilhafte Ausgestaltung besteht darin, dass die Spannungsschwankungswerte bzw die zugehörigen Grenzwerte zu ΔU sowie das Zeitfenster ΔT einstellbar ist, mit der Wirkung, wie oben bereits ausgeführt.

Die Erfindung ist in der Zeichnung dargestellt und nachfolgend näher erläutert.

Es zeigt:
- Figur 1:: Ausführungsbeispiel
- Figur 2:: Detail zur Drehzahlsteuerung des Generator.

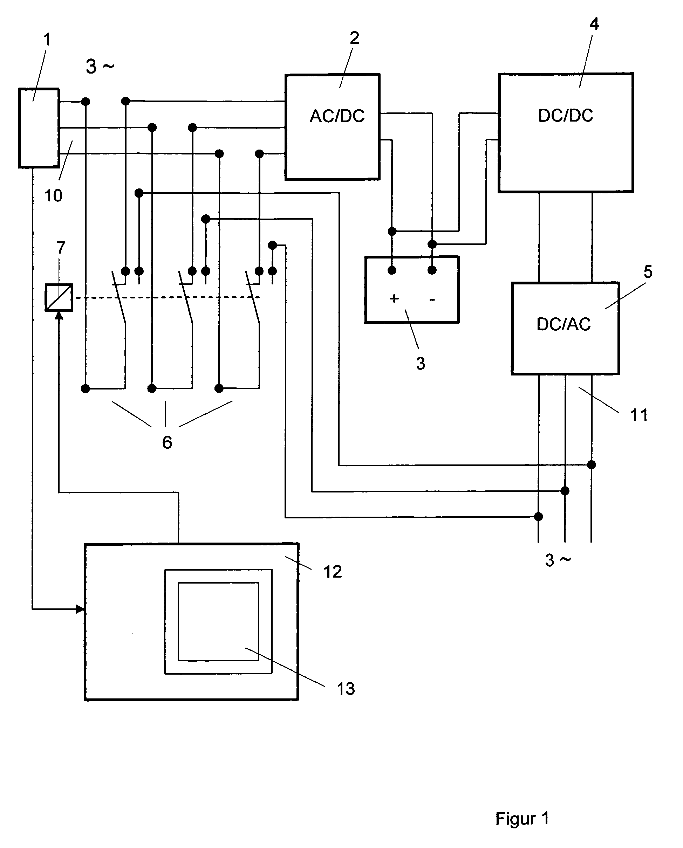

Figur 1 zeigt ein erstes Ausführungsbeispiel in schematischer Darstellung. Am elektrischen hier 3-phasigen Wechselstromausgang 10 des Generators 1 ist in erfindungsgemäßer Weise der Umschalter 6, der ebenfalls 3-phasig angelegt ist, und somit aus drei Wechselschaltkontakten besteht, angeordnet. Mit Hilfe des Umschalters 6, dessen Schaltkontakte über den Umschalterantrieb 7, bspw eine Magnetspule betätigt werden, können die 3 Phasen des Ausganges 10 wahlweise entweder direkt auf den Ausgang des wechselerichters 11 geschaltet werden, und wahlweise über die Lade und Umrichterschaltung mit Gleichrichter 2, Akkumulator 3, DC/DC-Wandler 4 und Wechselrichter 5.

Im erstgenannten Fall wird der Ausgang 10 des Generators 1 damit ausgangsseitig zum Wechselrichter geschaltet, d.h der Ausgang des Generators wird direkt ins 3-Phasen-Netz geschaltet, ohne dass eine Spannungspufferung und parallele Ladung über den Akkumulator erfolgt.

Im hier dargestellten Fall, d.h. in dem hier gezeigten Schaltzustand des Umschalters 6 liegt die Ausgangsspannung des Generators 1 direkt am 3-phasigen Gleichrichter 2 an, der aus dem Wechselstrom, bzw der Wechselspannung eine Gleichspannung macht. Der Ausgang des Gleichrichters 2 liegt dabei an dem Akkumulator 3 an und läd diesen. Parallel an den Kontakten +/- der Akkumulators 3 liegt ein DC/DC-Wandler 4, der bei schwankenden Spannungswerten die Spannung auf ein in etwa gleiches Spannungsniveau ausregelt. Der Ausgang des DC/DC-Wandlers liegt dabei wiederum am Eingang des Wechselrichters 5 an, der daraus wieder eine 3-phasige Wechselspannung generiert und diese am Ausgang 11 ausspeist.

Hierbei ist die Schaltung nur prinzipiell dargestellt, denn die Gleichrichtung von 3-phasigem Wechselstrom, d.h. Drehstrom ist nicht trivial. Ebenso ist die wechselrichtung eine Drehstromes aus einem Gleichstrom bzw eine 3-phasige Wechselspannung aus einer Gleichspannung schaltungstechnisch nicht unaufwändig.

Für den Fall, dass am Generator 1 erzeugte Energie nicht sofort genutzt wird, ist aber die Nutzung dieser Schaltung als Lade- und Speichervorgang sinnvoll. Dieser Betriebsmodus ist auch sinnvoll, wenn die Generatorausgangsspannung sehr stark schwankend ist. Dabei kann der Akkumulator und der DC/DC-Wandler als eine Art Puffer eingesetzt werden.

In der hier dargestellte Verschaltung ist jedoch auch eine weitergehende Betriebsweise beschreibbar. Der Umschalter 6 wird über eine Antrieb betätigt, der aus einem Elektromagneten, d.h. einen Solenoiden bestehen kann. Dies erfolgt hierbei über eine zentrale Steuerung 12. Diese Steuerung liest ausserdem vom Generator 6 auf allen Phasen die aktuell anliegende Spannung, durch Spannungssensoren aus, die nachfolgend noch beschrieben werden. Mit Hilfe der Logik in der Steuerung 12 kann abhängig von den Spannungsschwankungen am Ausgang 10 des Generators 1 über die oben beschriebene Auswertung von ΔU und ΔT dann der Umschalter 6 bzw der Antrieb 7 des Umschalters automatisch betätigt werden.

So schaltet dieser beispielsweise bei in den genannten Grenzen stabiler Ausgangsspannung, den Ausgang 10 des Generators 1 direkt auf den Ausgang des Wechselrichters 11. D.h. die elektronischen Komponenten 2, 4, und 5 sind überbrückt.

Liegt die Spannungsschwankung aber ausserhalb der Toleranzbreiten, und wird diese über die Spannungssensoren am Generator 1 an die Steuerung gemeldet, bzw dort gemessen, so generiert die Steuerung 12 eine Steuersignal auf den Antrieb 7 und betätigt damit den Umschalter 6 so, dass der Ausgang 10 des Generators über die Komponenten 2, 3, 4, und 5 umgeschaltet wird.

Neben dieser an die Spannungsschwankung gekoppelten automatischen Umschaltung kann es auch eine Umstellung der Steuerung auf manuelle Umschaltung geben.

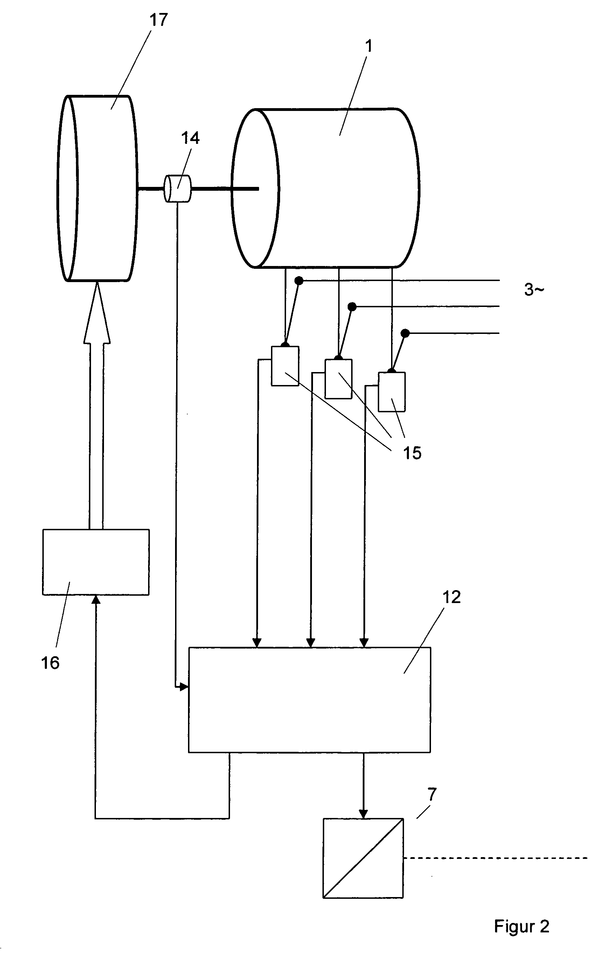

Eine weitere erweiterte Funktionsweise ist in der nur im Detail dargestellten Prinzipstruktur gemäß Figur 2 zu sehen. Der Generator 1 bzw der hier nicht sichtbare Rotor im Innernen des Generators 1 wird über eine Turbine 17 rotationsmäßig angetrieben. Zusätzlich kann die Drehzahl durch einen Drehzahlsensor 14 erfasst werden. So wird der Wert des Drehzahlsensors 14 in die Steuerung 12 eingelesen. Ferner werden die Spannungssensorwerte der Spannungssensoren 15 auf allen Phasen des Drehstromausganges in die Steuerung 12 eingelesen, und zwar im gesamten laufenden Betrieb des Generators 1. Neben der in Figur 1 bereits beschriebenen Funktionsweise kann die Steuerung 12 den Antrieb 7 des Umschalters 6 betätigen, und die in der Beschreibung zu Figur 1 dargelegte Umschaltung generieren. Zusätzlich oder anstatt kann nun die Steuerung auch ein Stellsignal für einen Zuführsteller 16 zur Turbine generieren. Über diesen Zuführsteller 16 kann dann die Drehzahl des Generators beeinflusst werden. So z.B. indem die Zufuhr von Druckmedium erhöht oder abgesenkt wird.

Ausserdem kann die Ansteuerung des Zuführstellers auch sinnbildlich für die gesamte Möglichkeit der Einflussnahme auf die Turbinendrehzahl stehen.

Hierzu einige Beispiele.

Bei einem Blockheizkraftwerk könnte dies auch die Wärmezuführregelung für einen Verdampfer sein, auf den Einfluss genommen wird, um letztendlich eine gewünschte und gleichlaufende Generatordrehzahl über die Steuerung 12 zu regeln.

Es könnte hierbei sogar die Einflussnahme auf die primäre wärmeerzeugung aus der Brennstoffzufuhr, oder der Abwärmezufuhr, oder sogar der initialen in situ Biogasproduktion sein.

Alle diese Einflussnahmen sind mit der erfindungsgemäßen Verschaltung und logischen Einbindung möglich.

### Bezugszeichen:

- 1: Generator
- 2: Gleichrichter AC/DC
- 3: Akkumulator
- 4: DC/DC-Wandler
- 5: Wechselrichter DC/AC
- 6: Umschalter
- 7: Antrieb für Umschalter

- 10: Ausgang Generator
- 11: Ausgang Wechselrichter
- 12: Steuerung
- 13: Display
- 14: Drehzahlsensor
- 15: Spannungssensor
- 16: Zuführsteller für Turbine
- 17: Turbine

## Patentansprüche

1. Einrichtung zur Erzeugung elektrischer Energie in Kleinkraftwerksanlagen, mit einem mindestens einphasigen am Ausgang der Energieerzeugung angeschlossenen Wechselstromausgang, und mit mindestens einem Gleichrichter und einem Akkumulator zur Zwischenspeicherung der elektrischen Energie sowie einem Wechselrichter über welchen die elektrische Energie an einem Externwechselstromanschluß zur Verfügung steht,
**dadurch gekennzeichnet,**
**dass** parallel zu den Mitteln (2, 3, 4, 5) zur elektrischen Zwischenspeicherung der Energie ein Schalter/Umschalter (6) liegt, über welchen wahlweise oder zusätzlich der Wechselstromausgang (10) der elektrischen Energieerzeugung und der Externwechselstromanschluss (11) direkt zusammenschaltbar sind.

2. Einrichtung nach Anspruch 1,
**dadurch gekennzeichnet,**
**dass** der erzeugte und abgerufene Wechselstrom als dreiphasiger Wechselstrom anliegt.

3. Einrichtung nach Anspruch 1,
**dadurch gekennzeichnet,**
**dass** der Umschalter (6) ein einphasiger Umschalter ist.

4. Einrichtung nach Anspruch 2,
**dadurch gekennzeichnet,**
**dass** der Umschalter (6) ein dreiphasiger Umschalter ist.

5. Einrichtung nach einem der vorhergehenden Ansprüche,
**dadurch gekennzeichnet,**
**dass** die Energieerzeugung und die Betätigung des Umschalters (6) von einer gemeinsamen Steuer- und Regeleinrichtung (12) steuerbar sind.

6. Einrichtung nach einem der vorhergehenden Ansprüche,
**dadurch gekennzeichnet,**
**dass** der Umschalter (6) über die Steuerung (12) betätigbar ist, derart, dass die am Wechselstromausgang (10) der elektrischen Energieerzeugung (1) anliegende Spannung bzw anliegenden Spannungen über elektrische Spannungssensoren (15) ermittelbar sind, und hierüber der elektrische Energieerzeugungsprozess spannungsstabil geregelbar ist.

7. Einrichtung nach einem der Ansprüche 1 bis 6,
**dadurch gekennzeichnet,**
**dass** der jeweilige aktuelle Betriebsstatus "Direkt-" oder "Akkumulator-" - Betrieb auf einem Display (13) anzeigbar ist.

8. Einrichtung nach einem der Ansprüche 1 bis 7,
**dadurch gekennzeichnet,**
**dass** über einen handbetätigten Schalter oder eine Fernbedienung vom automatisch generierten Umschaltbetrieb auf manuellen Umschaltbetrieb umschaltbar ist.

9. Verfahren zur Erzeugung elektrischer Energie in Kleinkraftwerksanlagen, mit einer Einrichtung gemäß einem der Ansprüche 1 bis 8,
**dadurch gekennzeichnet,**
**dass** parallel zu den Mitteln zur elektrischen Zwischenspeicherung der Energie ein Schalter/Umschalter liegt, über welchen wahlweise oder zusätzlich der Wechsel stromausgang der elektrischen Energieerzeugung und der Externwechselstromanschluss direkt zusammenschaltbar sind, und dass der Umschaltvorgang in Abhängigkeit zur Stabilität der am Wechselstromausgang der elektrischen Energieerzeugung anliegenden elektrischen Spannung zugeschaltet wird.

10. Verfahren nach Anspruch 9,
**dadurch gekennzeichnet,**
**dass** die Betätigung der Umschaltung in Abhängigkeit zu dem an den Klemmen des Wechselstromausganges der elektrischen Energieerzeugung gemessenen Spannung erfolgt, derart, dass bei Auftreten von Schwankung der elektrischen Spannung ausserhalb einer Schwankungstoleranz von ΔU über einen Zeitraum von mehr als ΔT der Umschalter so betätigt wird, dass die Energieversorgung auf die über den Akkumulator und die Um- und wechselrichter geführte Stromversorgung automatisch geschaltet wird.

11. Verfahren nach Anspruch 9,
**dadurch gekennzeichnet,**
**dass** die Drehzahl des Generators so geregelt wird, dass die Schwankungen innerhalb von ΔU und ΔT bleiben.

12. Verfahren nach Anspruch 11,
**dadurch gekennzeichnet,**
**dass** der Beströmungsprozess einer den Generator antreibenden Turbine in Abhängikeit der an den Klemmen des Wechselstromausganges der elektrischen Energieerzeugung gemessenen Spannung U derart geregelt wird, dass die am besagten Wechselstromausgang anliegende elektrische Spannung innerhalb einer Schwankungsbreite von ΔU bleibt.

13. Verfahren nach einem der Ansprüche 9 bis 12,
**dadurch gekennzeichnet,**
**dass** der Wert von ΔU bei +/- 15 Volt liegt.

14. Verfahren nach einem der Ansprüche 9 bis 13,
**dadurch gekennzeichnet,**
**dass** das Zeitfenster innerhalb der Spannungsschwankungen oberhalb von |ΔU| liegen, bei ΔT = 10 Sekunden liegt.

15. Verfahren nach einem der Ansprüche 9 bis 14,
**dadurch gekennzeichnet,**
**dass** die Grenzwerte der Spannungstoleranz ΔU und/oder die Grenzwerte des Zeitfensters ΔT einstellbar sind.
